# FASCICULE DE BREVET EUROPEEN

(11) **EP 3 451 361 B1**
(45) Date de publication et mention de la délivrance du brevet: **26.01.2022**
(21) Numéro de dépôt: 18192374.9
(22) Date de dépôt: 04.09.2018
(51) Int. Cl.: H01H 71/74, H02H 3/00

(54) **DISPOSITIF DE COMMUTATION ÉLECTRIQUE ET PROCÉDÉS DE CONFIGURATION ET DE DIAGNOSTIC ASSOCIÉS**
ELEKTRISCHE SCHALTVORRICHTUNG UND ENTSPRECHENDE KONFIGURATIONS- UND DIAGNOSEVERFAHREN
ELECTRIC SWITCHING DEVICE AND ASSOCIATED CONFIGURATION AND DIAGNOSTIC METHODS

(30) Priorité: 05.09.2017 FR 1758182
(43) Date de publication de la demande: 06.03.2019
(73) Titulaire: Schneider Electric Industries SAS, 92500 Rueil-Malmaison (FR)
(72) Inventeur: ODILLE, Fabien, 38050 GRENOBLE Cedex 09 (FR)
(74) Mandataire: Lavoix

(56) Documents cités:
- EP-A2- 2 110 916
- DE-U1-202016 102 436
- US-A1- 2013 148 249

## Description

La présente invention concerne un dispositif de commutation électrique. La présente invention concerne également un procédé de configuration d'un dispositif de commutation électrique, et un procédé de diagnostic de la nature d'un défaut électrique.

Les dispositifs de commutation électrique sont fréquemment utilisés pour des applications de protection d'installations électriques. De tels dispositifs de commutation, tels que des disjoncteurs, sont configurés pour interrompre un courant électrique en cas de détection d'une anomalie. En particulier, ces dispositifs de commutation comprennent en général un dispositif de mesure du courant électrique et un module de pilotage apte à détecter une anomalie à partir de la mesure du courant et à commander en réponse l'interruption du courant.

Dans des installations domestiques, une simple mesure de l'intensité du courant permet d'interrompre le courant en cas de court-circuit.

Cependant, dans des installations industrielles, les paramètres du courant à analyser sont souvent complexes, afin de détecter non seulement des court-circuits, mais d'autres types de défauts spécifiques à l'installation. Par exemple, une installation comprenant des moteurs triphasés sera équipée de disjoncteurs propres à détecter un échauffement de l'installation, un déséquilibre de phase, ou encore un blocage ou un démarrage trop long du moteur lié à des problèmes mécaniques.

Ainsi, les dispositifs de commutation prévus pour des installations industrielles requièrent un réglage plus complexe, faisant intervenir de nombreux paramètres.

Afin de permettre le réglage de ces paramètres par un opérateur, il existe des disjoncteurs sur lesquels il est possible de connecter un module de communication permettant à un opérateur de régler un grand nombre de paramètres du disjoncteur sans qu'il soit nécessaire de prévoir sur une face du disjoncteur des moyens de réglage volumineux tels que des boutons correspondant à chaque paramètre.

Cependant, la présence d'un tel module de communication entraîne une complexification du module de pilotage, qui doit gérer le transfert d'informations avec le module de communication. Or, une telle complexification augmente la consommation du module de pilotage. Le dispositif de commutation est donc susceptible de ne plus assurer correctement l'interruption du courant si l'alimentation électrique disponible est trop faible.

Le document "DE 20 2016 102436 U1" décrit un dispositif de commutation électrique selon le préambule de la revendication 1.

L'invention a pour but de proposer un dispositif de commutation qui soit sécurisé de manière satisfaisante.

A cet effet, l'invention a pour objet un dispositif de commutation électrique comprenant au moins deux plages de connexion, un dispositif de mesure configuré pour mesurer une première grandeur électrique d'un courant électrique circulant entre les deux plages de connexion, un système d'alimentation électrique propre à délivrer un premier courant d'alimentation électrique, un module de déclenchement et un organe de commutation propre à commuter entre une première position connectant électriquement les deux plages de connexion et une deuxième position dans laquelle les deux plages de connexion sont électriquement déconnectées l'une de l'autre, le module de déclenchement comprenant:
- une première mémoire de stockage de premières valeurs de paramètres de détection,
- un premier module de pilotage configuré pour détecter un défaut électrique en fonction au moins de valeurs mesurées par le dispositif de mesure et des premières valeurs stockées et pour générer en réponse un signal de commutation de l'organe de commutation, le dispositif de commutation électrique étant caractérisé en ce que :
- un module de communication comprend une deuxième mémoire non-volatile, le module de communication étant configuré pour recevoir, par communication radiofréquence, un signal de configuration contenant des deuxièmes valeurs des paramètres de détection et pour stocker les deuxièmes valeurs reçues dans la deuxième mémoire,
- le module de déclenchement comprend, en outre, un deuxième module de pilotage configuré pour remplacer, dans la première mémoire, les premières valeurs par les deuxièmes valeurs, et
- le premier module de pilotage est configuré pour comparer une deuxième grandeur électrique du premier courant d'alimentation électrique à un seuil et pour commander l'alimentation électrique du deuxième module de pilotage si la grandeur électrique est supérieure ou égale au seuil.

Suivant des modes de réalisation particuliers, le dispositif de commutation présente une ou plusieurs des caractéristiques optionnelles suivantes, prises isolément ou suivant toutes les caractéristiques techniquement possibles :
- la première mémoire est une mémoire non-volatile ;
- le deuxième module de pilotage est configuré pour comparer les deuxièmes valeurs stockées dans la deuxième mémoire à au moins une plage de valeur permise, et pour substituer, dans la première mémoire, les deuxièmes valeurs aux premières valeurs seulement si les deuxièmes valeurs appartiennent à une plage de valeur permise ;
- le premier module de pilotage est configuré pour, suite à la détection d'un défaut, transmettre au deuxième module de pilotage des données d'identification du défaut détecté, le deuxième module de pilotage étant configuré pour inscrire les données d'identification dans la deuxième mémoire ;

- le premier module de pilotage est configuré pour, suite à la détection d'un défaut, transmettre au deuxième module de pilotage un signal d'alerte signalant qu'une coupure de l'alimentation électrique du deuxième module de pilotage va avoir lieu, le deuxième module de pilotage comportant un dispositif de stockage d'énergie électrique configuré pour alimenter électriquement le deuxième module de pilotage depuis la réception du signal d'alerte jusqu'à l'inscription des données d'identification dans la deuxième mémoire ;
- le module de communication est configuré pour générer, à partir du signal de configuration, un deuxième courant électrique d'alimentation du module de communication ;
- le deuxième module de pilotage est configuré pour, suite à une reprise de l'alimentation électrique du deuxième module de pilotage après une période de temps pendant laquelle le deuxième module de pilotage n'était pas alimenté électriquement :
   * consulter la deuxième mémoire, et
   * si des deuxièmes valeurs de paramètres ont été stockées dans la deuxième mémoire pendant la période de temps pendant laquelle le deuxième module de pilotage n'était pas alimenté, remplacer dans la première mémoire les premières valeurs par les deuxièmes valeurs ;
- le deuxième module de pilotage est, en outre, configuré pour recevoir, par liaison filaire, des troisièmes valeurs des paramètres de détection provenant d'un dispositif de configuration distinct du dispositif de commutation électrique et pour remplacer, dans la première mémoire et/ou dans la deuxième mémoire, les premières valeurs et/ou les deuxièmes valeurs par les troisièmes valeurs reçues ;
- le système d'alimentation électrique comprend des transformateurs de courants propres à générer le premier courant électrique à partir d'au moins un courant électrique circulant entre les deux plages de connexion ; et
- le dispositif de commutation électrique comporte un déclencheur et un disjoncteur, le déclencheur comportant un boîtier accueillant le module de déclenchement, le disjoncteur comprenant un boîtier accueillant l'organe de commutation, les boîtiers du déclencheur et du disjoncteur étant distincts l'un de l'autre.

L'invention a également pour objet un procédé de configuration d'un dispositif de commutation comprenant au moins deux plages de connexion, un dispositif de mesure configuré pour mesurer une grandeur électrique d'un courant électrique circulant entre les deux plages de connexion, un système d'alimentation électrique propre à délivrer un premier courant d'alimentation électrique, un module de déclenchement et un organe de commutation propre à commuter entre une première position connectant électriquement les deux plages de connexion et une deuxième position dans laquelle les deux plages de connexion sont électriquement déconnectées l'une de l'autre, le module de déclenchement comprenant :
- une première mémoire dans laquelle des premières valeurs de paramètres de détection sont mémorisées,
- un premier module de pilotage configuré pour détecter un défaut électrique en fonction au moins de valeurs mesurées par le dispositif de mesure et des premières valeurs stockées et pour générer en réponse un signal de commutation de l'organe de commutation,
- un module de communication comprenant une deuxième mémoire non-volatile, et
- un deuxième module de pilotage,
le procédé comprenant des étapes de:
- réception de deuxièmes valeurs des paramètres de détection, par communication radiofréquence, par le module de communication,
- mémorisation des deuxièmes valeurs dans la deuxième mémoire,
- comparaison, par le premier module de pilotage d'une deuxième grandeur électrique du premier courant d'alimentation électrique à un seuil, et
- si la deuxième grandeur électrique est supérieure ou égale au seuil, commande, par le premier module de pilotage, de l'alimentation électrique du deuxième module de pilotage et remplacement, dans la première mémoire, par le deuxième module de pilotage, des premières valeurs par les deuxièmes valeurs.

Suivant des modes de mise en oeuvre particuliers, le procédé de configuration présente une ou plusieurs des caractéristiques optionnelles suivantes, prises isolément ou suivant toutes les caractéristiques techniquement possibles :
- le procédé comprend, en outre, si la deuxième grandeur électrique est strictement inférieure au seuil, l'absence d'alimentation électrique du deuxième module de pilotage et l'attente que la deuxième grandeur électrique soit supérieure au seuil ;
- le procédé comprend, en outre, des étapes de
   * réception, par le deuxième module de pilotage, via une liaison filaire de troisièmes valeurs des paramètres de détection,
   * remplacement, dans la deuxième mémoire, des deuxièmes valeurs par les troisièmes valeurs, et
   * remplacement, dans la première mémoire des premières valeurs par les troisièmes valeurs ;
- le procédé comprend, en outre, une étape de comparaison, par le deuxième module de pilotage, des deuxièmes valeurs mémorisées dans la deuxième mémoire à au moins une plage de valeurs permise, l'étape de remplacement dans la première mémoire, par le deuxième module de pilotage, des premières valeurs par les deuxièmes valeurs étant mise en œuvre seulement si les deuxièmes valeurs appartiennent à une plage de valeur permise.

L'invention a également pour objet un procédé de diagnostic de la nature d'un défaut électrique, comprenant des étapes de :
- mise en oeuvre d'un procédé de configuration tel que défini ci-dessus,
- détection, par le premier module de pilotage, d'un défaut électrique,
- commande, par le premier module de pilotage d'une coupure, par l'organe de commutation, du courant électrique circulant entre les deux plages de connexion,
- génération, par le premier module de pilotage, de données d'identification du défaut électrique,
- transmission des données d'identification au deuxième module de pilotage, et
- inscription, dans la deuxième mémoire, des données d'identification, et
- émission, par le module de communication, d'un signal d'identification radiofréquence comprenant les données d'identification.

Suivant des modes de mise en œuvre particuliers, le procédé de diagnostic présente une ou plusieurs des caractéristiques optionnelles suivantes, prises isolément ou suivant toutes les caractéristiques techniquement possibles :
- le procédé comprend, en outre, une étape d'émission, par un appareil mobile d'un signal radiofréquence provoquant la génération, par une antenne du module de communication, d'un courant électrique d'alimentation du module de communication ; et
- le deuxième module de pilotage est alimenté électriquement, pendant les étapes de coupure, de transmission des données d'identification et d'inscription, par un courant électrique généré par un dispositif de stockage d'énergie électrique.

L'invention sera mieux comprise à la lecture de la description qui va suivre, donnée uniquement à titre d'exemple non limitatif et faite en référence aux dessins annexés, sur lesquels :
- la figure 1 est une représentation schématique d'un dispositif de commutation comprenant un dispositif de coupure et un système de commande du déclenchement d'une coupure,
- la figure 2 est une représentation schématique de l'architecture du système de commande du dispositif de commutation,
- la figure 3 est un schéma bloc d'un procédé de configuration du dispositif de commutation, et
- la figure 4 est un schéma bloc d'un procédé de diagnostic de la nature d'un défaut électrique.

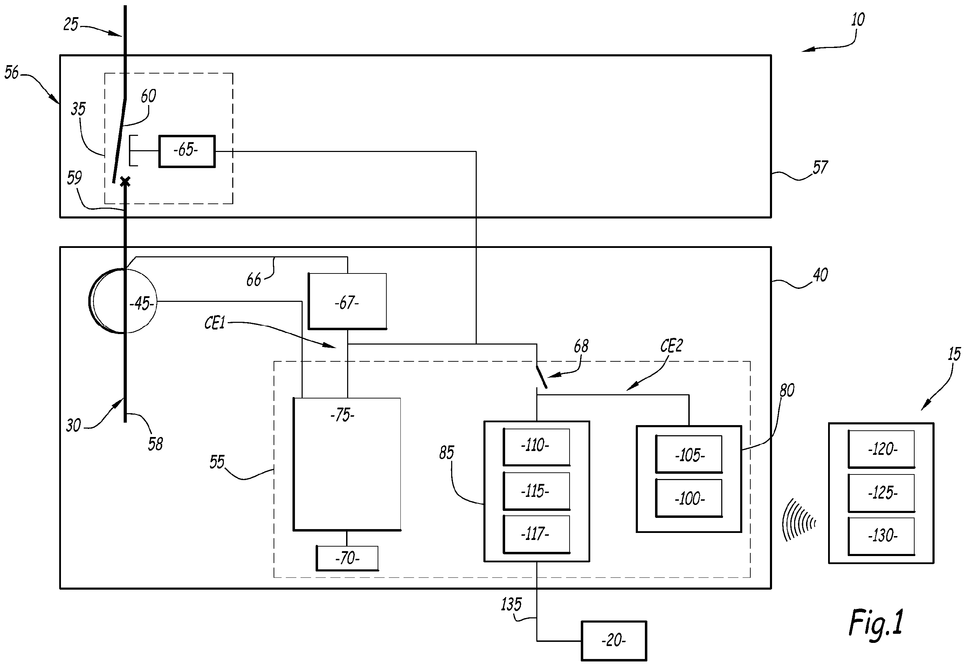

Un dispositif de commutation électrique 10, un appareil mobile 15 et un dispositif de configuration 20 sont représenté sur la figure 1.

Le dispositif de commutation 10 est configuré pour recevoir un courant électrique C d'un premier conducteur électrique et pour transmettre le courant C à un deuxième conducteur électrique. Le dispositif de commutation 10 est, en outre, configuré pour interrompre le passage du courant électrique C entre le premier et le deuxième conducteur électrique.

Le dispositif de commutation 10 est intégré dans une installation électrique comprenant au moins un dispositif consommateur d'électricité. Par exemple, le dispositif de commutation 10 est interposé entre une source d'énergie électrique et au moins un dispositif consommateur d'électricité de l'installation électrique. Dans ce cas, le dispositif de commutation 10 est configuré pour recevoir le courant électrique C de la source d'énergie électrique et pour alimenter chaque dispositif consommateur d'électricité avec le courant électrique C. Le courant électrique C est, par exemple, une phase d'un courant triphasé.

Un moteur électrique, tel qu'un moteur triphasé, est un exemple de dispositif consommateur d'électricité.

Le dispositif de commutation 10 est configuré pour mesurer une valeur d'une première grandeur électrique du courant C et pour permettre ou interrompre le passage du courant C en fonction de la valeur mesurée.

Le dispositif de commutation 10 comporte au moins une plage de connexion d'entrée 25, au moins une plage de connexion de sortie 30, au moins un organe de commutation 35, un boîtier 40, un dispositif de mesure 45, un système d'alimentation électrique 50 et un module de déclenchement 55.

Sur la figure 1, le module de déclenchement 55, le dispositif de mesure 45 et le système d'alimentation électrique 50 sont accueillis dans le boîtier 40 pour former un déclencheur alors que l'organe de commutation 35 est intégré dans un disjoncteur 56 distinct du déclencheur.

Par exemple, le disjoncteur 56 comporte un boîtier 57 distinct du boîtier 40 du déclencheur.

Il est entendu par « distinct » que les boîtiers 57 et 40 sont susceptibles d'être déplacés indépendamment l'un de l'autre. Selon un mode de réalisation, les boîtiers 57 et 40 sont susceptibles d'être fixés l'un à l'autre de manière réversible. Les boîtiers 57 et 40 sont donc séparables l'un de l'autre. Sur la figure 1, les boîtiers 57 et 40 sont représentés fixés l'un à l'autre.

Selon un mode de réalisation, les boîtiers 57 et 40 sont susceptibles d'être distants l'un de l'autre, auquel cas le disjoncteur 56 et le déclencheur sont connectés l'un à l'autre par des conducteurs électriques filaires pour assurer le passage du courant C entre la borne de connexion d'entrée 25 et la borne de connexion de sortie 30.

Selon l'exemple de la figure 1, le dispositif de commutation 10 comporte une unique plage de connexion d'entrée 25, une unique plage de connexion de sortie 30 et un unique organe de commutation 35. Il est à noter que le nombre de plages de connexion d'entrée 25, de plages de connexion de sortie 30 et d'organes de commutation 35 est susceptible de varier. Par exemple, dans un mode de réalisation, le dispositif de commutation 10 est un dispositif de commutation triphasé comprenant trois plages de connexion d'entrée 25, trois plages de connexion de sortie 30 et trois organes de commutation 35. Selon une variante, un unique organe de commutation 35 est commun à toutes les plages de connexion d'entrée et de sortie 25, 30.

La plage de connexion d'entrée 25 est configurée pour être connectée au premier conducteur et pour recevoir le courant électrique C du premier conducteur électrique.

La plage de connexion de sortie 30 est configurée pour être connectée au deuxième conducteur et pour transmettre le courant électrique C au deuxième conducteur électrique.

Selon l'exemple de la figure 1, la plage de connexion d'entrée 25est une pièce métallique traversant la paroi du boîtier 57 du disjoncteur et configurée pour, à une extrémité, être connectée au conducteur électrique correspondant, l'autre extrémité étant accueillie dans le boîtier 57 de du disjoncteur 56. En variante, chaque plage de connexion 25, 30 comporte un ensemble de pièces électriquement conductrices connectées les unes aux autres. Par exemple, la plage de connexion de sortie 30 comporte une pièce 58 reçue partiellement dans le boîtier 40 et une pièce 59 reçue partiellement dans le boîtier 57.

La pièce 58 est un conducteur électrique configuré pour, à une extrémité, être connectée au conducteur électrique correspondant et, à l'autre extrémité, être connecté à la pièce 59. Il est à noter que tout type de connexion électrique entre les pièces 58 et 59 est envisageable.

L'organe de commutation 35 est mobile par rapport au boîtier 57 et aux plages de connexion d'entrée et de sortie 25, 30 entre une position fermée et une position ouverte. Sur la figure 1, l'organe de connexion 35 est représenté dans sa position ouverte.

Lorsque l'organe de commutation 35 est dans la position fermée, l'organe de commutation 35 autorise le passage du courant C entre les plages de connexion d'entrée et de sortie 25, 30. En particulier, l'organe de commutation 35 est connecté électriquement à la pièce 59 de la plage de connexion de sortie 30 et à une extrémité de la plage de connexion d'entrée 25.

Lorsque l'organe de commutation 35 est dans la position ouverte, l'organe de commutation 35 empêche le passage du courant C entre les plages de connexion d'entrée et de sortie 25, 30.

L'organe de commutation 35 est configuré pour commuter entre ses positions ouverte et fermée.

Par exemple, l'organe de commutation 35 est configuré pour commuter entre les positions ouverte et fermée en fonction des valeurs de la première grandeur du courant C mesurées.

Selon l'exemple de la figure 1, l'organe de commutation 35 comporte un élément de connexion 60 et un actionneur 65.

L'élément de connexion 60 est mobile par rapport aux plages de connexion 25, 30 entre une première position, visible sur la figure 1, et une deuxième position Lorsque l'organe de commutation 35 est dans la position fermée, l'élément de connexion 60 est dans sa première position et connecte électriquement les deux plages de connexion d'entrée et de sortie 25, 30.

Lorsque l'organe de commutation 35 est dans la position ouverte, l'élément de connexion 60 est dans sa deuxième position et les deux plages de connexion d'entrée et de sortie 25, 30 sont déconnectées électriquement l'une de l'autre.

L'élément de connexion 60 est réalisé en un matériau électriquement conducteur.

L'actionneur 65 est configuré pour faire commuter l'organe de commutation 35 entre la position fermée et la position ouverte En particulier, l'actionneur 65 est configuré pour déplacer l'élément de connexion 60 entre sa première position et sa deuxième position.

L'actionneur 65 comprend, par exemple, une manette permettant à un opérateur de déplacer manuellement l'organe de commutation 35 entre ses deux positions et des éléments magnétiques configurés pour déplacer l'organe de commutation 35 depuis sa position fermée jusqu'à sa position ouverte suite à la réception d'une commande envoyée par le module de déclenchement 55. En particulier, ma manette est configurée pour permettre à l'opérateur de réarmer le dispositif de commutation 10 en déplaçant l'organe de commutation depuis sa position ouverte jusqu'à sa position fermée.

Le boîtier 40 est propre à isoler électriquement le module de déclenchement 55 et le dispositif de mesure 45 de l'extérieur du boîtier 40. Le boîtier 40 est, par exemple, réalisé en matière plastique.

Le dispositif de mesure 45 est configuré pour mesurer au moins une première grandeur électrique du courant électrique C.

Une première grandeur est, par exemple, une intensité du courant électrique C. Un dispositif de mesure 45 comprenant des tores de Rogowski est un exemple de dispositif de mesure d'une intensité. Les tores de Rogowski sont des éléments générant une tension électrique proportionnelle à l'intensité du courant électrique traversant un conducteur entouré par les tores. La tension électrique ainsi générée est alors mesurée et le dispositif de mesure 45 en déduit une valeur de l'intensité du courant électrique C.

Selon une variante, une autre première grandeur mesurée est une tension du courant électrique C.

Le système d'alimentation électrique 50 est configuré pour alimenter électriquement le module de déclenchement 55 et l'actionneur 65. En particulier, le système d'alimentation électrique 50 est configuré pour alimenter électriquement le module de déclenchement 55 avec un premier courant électrique d'alimentation C1.

Le système d'alimentation électrique 50 est, par exemple, configuré pour générer le premier courant d'alimentation électrique C1 à partir du courant électrique C traversant le dispositif de commutation 10. Selon un mode de réalisation, le système d'alimentation électrique 50 comprend un transformateur est configuré pour générer le premier courant d'alimentation électrique C1 à partir du courant électrique C traversant le dispositif de commutation 10. Sur la figure 1, le transformateur est intégré au dispositif de mesure 45, par exemple reçu dans une enveloppe commune isolant électriquement le transformateur et le dispositif de mesure 45 du reste du dispositif de commutation 10.

Le système d'alimentation 50 comporte au moins un premier circuit électrique CE1 et un deuxième circuit électrique CE2 distincts l'un de l'autre. Il est entendu par « distinct » que le système d'alimentation 50 est configuré pour alimenter au moins l'un des deux circuits électriques CE1, CE2 indépendamment de l'autre circuit électrique CE1, CE2.

Le premier circuit électrique CE1 présente une première tension électrique V1. La première tension électrique V1 est comprise entre 1 volt (V) et 10 V. Par exemple, la première tension électrique V1 est égale à 3 V.

Le premier courant électrique C1 parcourt le premier circuit électrique CE1.

Le premier circuit électrique CE1 comprend, par exemple, un convertisseur 67 configuré pour générer le premier courant électrique C1 à partir de la tension aux bornes du transformateur.

Le deuxième circuit électrique CE2 présente une deuxième tension électrique V2. La deuxième tension électrique V2 est comprise entre 1 volt (V) et 10 V. Par exemple, la deuxième tension électrique V2 est égale à 3 V.

Le deuxième circuit électrique CE2 est propre à être parcouru par un deuxième courant d'alimentation C2.

Le deuxième circuit électrique CE2 comprend, par exemple, un interrupteur 68 propre à connecter électriquement le deuxième circuit électrique CE2 au premier circuit électrique CE1. Lorsque les deux circuits électriques CE1 et CE2 sont électriquement connectés l'un à l'autre, une partie du premier courant d'alimentation C1 est prélevée pour former, dans le deuxième circuit électrique CE2, le deuxième courant d'alimentation C2.

Le module de déclenchement 55 est configuré pour détecter un défaut électrique et pour commander la commutation de l'organe de commutation 35 depuis sa position fermée jusqu'à sa position ouverte lorsque le défaut électrique est détecté.

Il est entendu par « défaut électrique » une anomalie de l'installation électrique provoquant une modification du courant électrique C.

Un court-circuit est un exemple d'anomalie. Un déséquilibre de phases, une surconsommation temporaire d'un dispositif consommateur d'électricité, un blocage ou un démarrage trop long d'un rotor d'un moteur électrique causé par des frottements ou des débris sont d'autres exemples d'anomalies.

Le module de déclenchement 55 est configuré pour détecter le défaut électrique à partir au moins des valeurs de la première grandeur mesurées par le dispositif de mesure 45 et de paramètres de détection P. Les paramètres de détection P sont des paramètres mémorisés dans le module de déclenchement 55 et permettant la détection du défaut électrique.

Par exemple, un paramètre de détection P est une valeur maximale autorisée pour l'intensité du courant électrique C. Lorsque l'intensité du courant électrique C est supérieure à l'intensité maximale autorisée, un défaut électrique tel qu'un court-circuit est détecté par le module de déclenchement 55.

Un taux de variation maximal autorisé pour une première grandeur électrique mesurée est un autre exemple de paramètre de détection P.

Certaines anomalies sont susceptibles de présenter, dans le courant électrique C, une signature caractéristique de l'anomalie. Par exemple, une augmentation progressive de l'intensité du courant électrique C est susceptible de provoquer un échauffement d'un dispositif consommateur d'électricité. Les paramètres de détection P comprennent, par exemple, au moins un gabarit temporel. Un exemple de gabarit temporel comporte une courbe prédéfinie décrivant l'évolution de la première grandeur mesurée en fonction du temps. Lorsque, pendant une durée prédéfinie, l'évolution temporelle la première grandeur mesurée est similaire à la courbe prédéfinie, l'anomalie est détectée.

Les paramètres de détection P varient en fonction de l'installation électrique à laquelle le dispositif de commutation 10 est connecté.

Le module de déclenchement 55 comporte une première mémoire 70, un premier module de pilotage 75, un module de communication 80 et un deuxième module de pilotage 85.

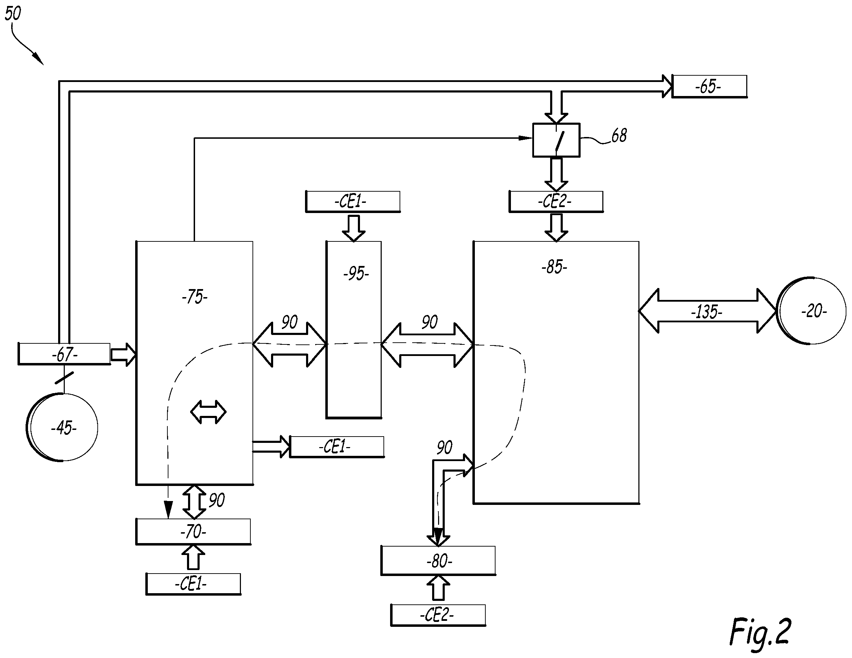

Les différents éléments du module de déclenchement 55 sont représentés sur la figure 2, sur laquelle les connexions entre ces éléments et le système d'alimentation 50 sont visibles. En particulier, des flèches indiquent les connexions entre les premier et deuxième circuits électriques CE1, CE2 et ces éléments.

La première mémoire 70 est une mémoire non-volatile. Une mémoire non-volatile est une mémoire dans laquelle les données stockées sont conservées même en l'absence d'alimentation électrique.

La première mémoire 70 est, par exemple, une mémoire EEPROM. Une mémoire EEPROM (de l'Anglais « Electrically-Erasable Programmable Read-Only Memory » signifie « mémoire morte effaçable électriquement et programmable »), aussi appelée E2PROM ou E²PROM.

Il est à noter que d'autres types de mémoires non-volatiles sont susceptibles d'être utilisés.

La première mémoire 70 est configurée pour stocker des valeurs, appelées premières valeurs, des paramètres de détection P.

La première mémoire 70 est propre à échanger des informations avec le premier module de pilotage 75. Par exemple, la première mémoire 70 et le premier module de pilotage 75 sont connectés l'un à l'autre par un bus de transfert de données 90.

Le premier module de pilotage 75 est configuré pour recueillir, dans la première mémoire 70, les paramètres de détection P. Le premier module de pilotage 75 est, en outre, configuré pour inscrire dans la première mémoire 70 des données telles que de nouvelles valeurs des paramètres de détection P.

Le premier module de pilotage 75 est, en outre, configuré pour recevoir, du dispositif de mesure 45, des valeurs de la première grandeur électrique mesurée. Par exemple, le premier module de pilotage 75 est connecté au dispositif de mesure 45 par une liaison analogique ou numérique 66.

Le premier module de pilotage 75 est configuré pour détecter le défaut électrique à partir au moins des valeurs de la première grandeur électrique mesurée et des paramètres de détection P.

Le premier module de pilotage 75 est configuré pour être alimenté électriquement par le premier circuit électrique CE1. Le premier module de pilotage 75 est configuré pour réguler le premier courant d'alimentation C1, par exemple par action sur le convertisseur 67.

Le premier module de pilotage 75 est configuré pour commander la connexion ou la déconnexion du deuxième circuit électrique CE2 par l'intermédiaire de l'interrupteur 68. En particulier, le premier module de pilotage 75 est configuré pour mesurer une deuxième grandeur électrique du premier courant d'alimentation C1 et pour commander l'alimentation électrique du deuxième module de pilotage 85 lorsque la deuxième grandeur électrique est supérieure ou égale à un seuil.

Par exemple, le premier module de pilotage 75 est configuré pour commander la connexion du deuxième circuit électrique CE2 au premier circuit électrique CE1 lorsque la deuxième grandeur électrique est supérieure ou égale à un seuil, et pour commander la déconnexion des deux circuits électriques CE1, CE2 lorsque la deuxième grandeur électrique est strictement inférieure au seuil.

La deuxième grandeur électrique est, par exemple, une puissance ou une intensité du premier courant d'alimentation C1. En particulier, si la puissance du premier courant d'alimentation C1 est inférieure au seuil, le premier module de pilotage 75 commande l'alimentation électrique du premier circuit électrique CE1 mais pas du deuxième circuit électrique CE2.

Le premier module de pilotage 75 est, en outre, configuré pour transmettre à l'actionneur 65 le signal de commutation lorsque le défaut électrique est détecté.

Le premier module de pilotage 75 est configuré pour échanger des informations avec le deuxième module de pilotage 85, par exemple à travers un bus de connexion 90. Selon un mode de réalisation, un tampon 95 (également appelé par le terme anglais « buffer » ou par l'expression « amplificateur séparateur ») est interposé entre les deux modules de pilotage 75, 85. Le tampon 95 est configuré pour être alimenté électriquement par le premier circuit électrique CE1.

Le premier module de pilotage 75 est, par exemple, un ASIC. Un ASIC (de l'Anglais « Application-Specific Integrated Circuit », signifiant littéralement « circuit intégré propre à une application ») est un circuit intégré spécialisé et dédié à une application spécifique.

Il est à noter que d'autres types de modules de pilotage sont susceptibles d'être utilisés. Par exemple, selon une variante, le premier module de pilotage 75 est un composant logique programmable. Un circuit logique programmable, ou réseau logique programmable, est un circuit intégré logique qui peut être reprogrammé après sa fabrication. Selon une autre variante, le premier module de pilotage 75 est une unité de traitement de données comprenant une mémoire, un processeur et une application logicielle comprenant des instructions de code enregistrées dans la mémoire et exécutables par le processeur.

Le module de communication 80 est un module de communication radiofréquence. Un module de communication radiofréquence est un module configuré pour échanger des données par ondes électromagnétiques radiofréquences.

Les ondes électromagnétiques radiofréquences sont les ondes électromagnétiques présentant une fréquence comprise entre 3 KiloHertz (KHz) et 3 GigaHertz (GHz).

En variante, le module de communication 80 est propre à émettre ou à recevoir une onde électromagnétique présentant une fréquence supérieure ou égale à 13,553 MHz, et inférieure ou égale à 13,567 MHz.

De préférence, le module de communication 80 est propre à émettre et à recevoir une onde électromagnétique présentant une fréquence supérieure ou égale à 13,553 MHz, et inférieure ou égale à 13,567 MHz.

Avantageusement, le module de communication 80 utilise un protocole de communication en champ proche (de l'anglais « Near-Field Communication », NFC). La communication en champ proche est une technologie de communication sans-fil à courte portée et haute fréquence, permettant l'échange d'informations entre des périphériques jusqu'à une distance d'environ 10 centimètres (cm). La technologie NFC est une extension de la norme ISO/CEI 14443.

Le module de communication 80 comporte une antenne 100 et une deuxième mémoire 105.

Le module de communication 80 est configuré pour recevoir, par communication radiofréquence, un message de configuration comprenant des valeurs, appelées deuxièmes valeurs, des paramètres de détection P. Le module de communication 80 est, en outre, configuré pour stocker les deuxièmes valeurs reçues dans la deuxième mémoire 105.

Le module de communication 80 est connecté au deuxième module de pilotage par un bus de liaison 90.

Le module de communication 80 est configuré pour être alimenté électriquement par le deuxième circuit électrique CE2.

La deuxième mémoire 105 est une mémoire non-volatile, par exemple une mémoire EEPROM.

Le deuxième module de pilotage 85 est une unité de traitement de données comprenant une troisième mémoire 110, un premier processeur 115 et un dispositif de stockage d'énergie électrique 117. La troisième mémoire 110 contient des instructions logicielles qui, lorsqu'elles sont exécutées sur le premier processeur 115, entraînent la mise en œuvre, par le deuxième module de pilotage 85, d'étapes d'un procédé de configuration du dispositif de commutation 10.

En variante, le deuxième module de pilotage 85 est un ASIC, ou encore un circuit logique programmable.

Le deuxième module de pilotage 85 est configuré pour remplacer, dans la première mémoire 70, les premières valeurs par les deuxièmes valeurs.

Plus précisément, le deuxième module de pilotage 85 est configuré pour collecter, dans la deuxième mémoire 105, les deuxièmes valeurs des paramètres de détection P et pour transmettre les deuxièmes valeurs au premier module de pilotage 75, et pour commander la substitution, dans la première mémoire, des premières valeurs des paramètres de détection P par les deuxièmes valeurs par le premier module de pilotage 75.

Selon une variante, le deuxième module de pilotage 85 est directement connecté à la première mémoire 70 et, lors du remplacement, substitue les deuxièmes valeurs aux premières valeurs dans la première mémoire 70 sans intervention du premier module de pilotage 75.

Le deuxième module de pilotage 85 est, en outre, configuré pour être connecté par une liaison filaire 135 au dispositif de configuration 20. La liaison filaire comprend, par exemple, un bus SPI asynchrone. Il est à noter que d'autres types de liaisons filaires et de protocoles de communication sont susceptibles d'être utilisés.

Le dispositif de stockage d'énergie électrique 117 est configuré pour générer un quatrième courant d'alimentation électrique C4 propre à alimenter électriquement le deuxième module de pilotage 85. Le dispositif de stockage d'énergie électrique 117 est, par exemple, un condensateur ou un ensemble de condensateurs.

L'appareil mobile 15 est configuré pour être transporté par un opérateur. Par exemple, l'appareil mobile 15 est une tablette numérique. En variante, l'appareil mobile 15 est un téléphone mobile, ou encore un appareil électronique spécifiquement conçu.

L'appareil mobile 15 comporte une première interface homme-machine 120, une unité de traitement de données 125 et un module de transfert 130.

La première interface homme-machine 120 comprend, par exemple, un écran tactile.

Le module de transfert 130 est configuré pour communiquer par communication radiofréquence avec le module de communication 80. L'appareil mobile 15 est, dans ce cas, un appareil sans fil.

Le dispositif de configuration 20 est, par exemple, un ordinateur tel qu'un ordinateur portable. Sur la figure 2, le dispositif de commutation 20 est représenté connecté au deuxième module de pilotage 85 du dispositif de commutation 10 par la liaison filaire 135.

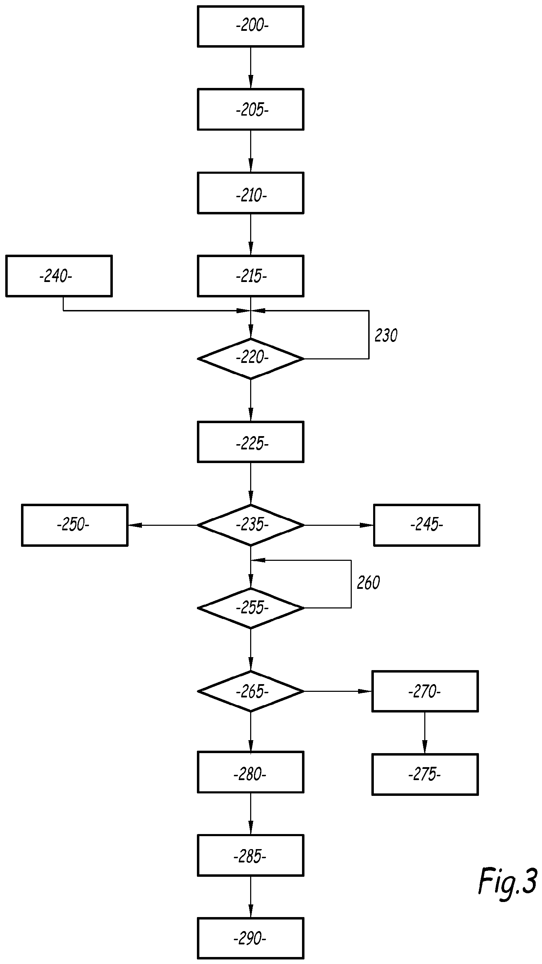

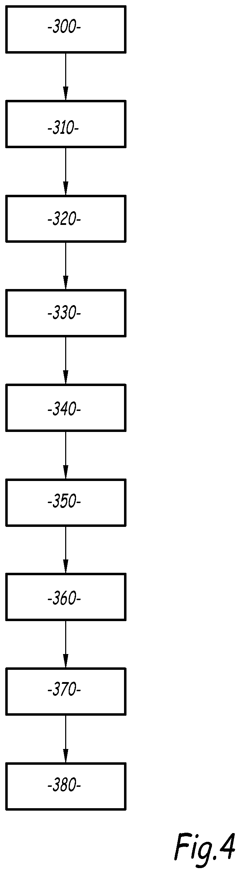

Le fonctionnement du dispositif de commutation 10 va maintenant être décrit en référence aux figures 3 et 4.

Un schéma-bloc comprenant des étapes d'un exemple de procédé de configuration du dispositif de commutation 10 par un opérateur à l'aide de l'appareil mobile 20 est représenté sur la figure 3. On suppose dans cet exemple que des premières valeurs des paramètres de détection P sont mémorisées dans la première mémoire 70 avant la mise en oeuvre du procédé de configuration.

Au cours d'une première étape 200, l'opérateur transmet à l'appareil mobile 15 via la première interface homme-machine 120, des deuxièmes valeurs des paramètres de détection P que l'opérateur souhaite voir adoptées par le dispositif de commutation 10.

Par exemple, un dispositif consommateur d'électricité a été ajouté ou modifié dans l'installation électrique et les paramètres de détection P doivent donc être modifiés pour prendre en compte cette modification.

Lors d'une deuxième étape 205, le module de transfert 130 génère un signal de configuration à destination du module de communication 80. Le signal de configuration permet le transfert d'énergie entre le module de transfert 130 et le module de communication 80. L'antenne 100 génère, à partir du signal de configuration, un troisième courant d'alimentation C3.

Le troisième courant d'alimentation C3 alimente électriquement la deuxième mémoire 105.

Au cours d'une troisième étape 210, les deuxièmes valeurs des paramètres de détection P sont transmises, via le signal de configuration, au module de communication 80. Le signal de configuration comprend, par exemple, l'heure de transmission des deuxièmes valeurs. En variante ou en complément, le signal de configuration comprend un ou des identifiants de l'appareil mobile 15 et/ou de l'opérateur, et, par exemple, un mot de passe associé.

Selon un mode de réalisation, le signal de configuration est un signal crypté.

Lors d'une quatrième étape 215, la deuxième mémoire 105 étant alimentée par le troisième courant d'alimentation C3, les deuxièmes valeurs sont inscrites dans la deuxième mémoire 105. Par exemple, des deuxièmes valeurs déjà mémorisées sont substituées aux deuxièmes valeurs transmises par l'appareil mobile 15.

La date et l'heure à laquelle les deuxièmes valeurs ont été transmises est, par exemple, également inscrite dans la deuxième mémoire 105. En variante ou en complément, un premier drapeau indiquant une modification des deuxièmes valeurs est mémorisé dans la deuxième mémoire 105. Le cas échéant, le ou les identifiants et/ou le mot de passe associé sont mémorisés dans la deuxième mémoire 105.

Il est entendu par « drapeau » une information, telle qu'une ou des valeurs d'un ou plusieurs bits d'information prédéfinis, prévue pour être interprétée par un contrôleur pour fournir une information contextuelle. Par exemple, un bit valant « 1 » si les deuxièmes valeurs ont été modifiées et « 0 » sinon est un exemple de drapeau.

Le signal de configuration est alors coupé par l'appareil mobile 15.

Deux alternatives sont possibles après la fin de la quatrième étape 215. Cela est représenté par une étape de test 220 sur la figure 3.

Si le deuxième module de pilotage 85 est alimenté électriquement, la quatrième étape 215 est suivie par une cinquième étape 225.

Si le deuxième module de pilotage 85 n'est pas alimenté par le deuxième courant d'alimentation C2, par exemple si la puissance électrique fournie par le convertisseur 67 est insuffisante pour alimenter simultanément les deux modules de pilotage 75, 85, les deuxièmes valeurs restent mémorisées dans la deuxième mémoire 105 en l'absence du signal de configuration et du troisième courant d'alimentation C3, mais ne sont pas traitées tant que le deuxième module de pilotage 85 n'est pas alimenté. Cela est représenté sur la figure 3 par une flèche 230.

Selon un exemple, lors des étapes 200 à 215, la deuxième grandeur électrique est strictement inférieure au seuil correspondant et le premier module de pilotage 75 ne commande pas l'alimentation électrique du deuxième module de pilotage 85. La cinquième étape 225 n'est donc pas mise en œuvre. Le dispositif de commutation met donc en œuvre une étape 230 d'attente que la deuxième grandeur électrique, par exemple la puissance électrique du premier courant d'alimentation électrique C1, soit suffisante pour permettre l'alimentation du deuxième module de pilotage 85.

Lorsque la deuxième grandeur électrique devient supérieure ou égale au seuil, le premier module de pilotage 75 commande l'alimentation du deuxième module de pilotage 85 avec le deuxième courant d'alimentation C2 est alors mise en œuvre.

Lors de la cinquième étape 225, le deuxième module de pilotage 85 collecte les deuxièmes valeurs stockées dans la deuxième mémoire 105. Les deuxièmes valeurs sont alors inscrites dans la troisième mémoire 110 du deuxième module de pilotage 85. L'heure de réception des deuxièmes valeurs et/ou le ou les identifiants et/ou le mot de passe sont également collectés par le deuxième module de pilotage 85.

Par exemple, le deuxième module de pilotage 85 vérifie périodiquement si des deuxièmes valeurs des paramètres de détection P ont été inscrites dans la deuxième mémoire 105 depuis la dernière vérification.

Selon un mode de réalisation, suite à une reprise de l'alimentation électrique du deuxième module de pilotage 85 après une période de temps au cours de laquelle le deuxième module de pilotage 85 n'était pas alimenté électriquement, le deuxième module de pilotage 85 consulte la deuxième mémoire 105 et vérifie si des deuxièmes valeurs ont été inscrites dans la deuxième mémoire 105 pendant la période au cours de laquelle le deuxième module de pilotage 85 n'était pas alimenté.

La cinquième étape 225 est suivie d'une sixième étape 235.

Il est à noter qu'en variante, l'opérateur est susceptible de transmettre de nouvelles valeurs des paramètres de détection P par l'intermédiaire du dispositif de configuration 20. Les valeurs des paramètres de détection P que l'opérateur cherche à transmettre sont alors appelées troisièmes valeurs.

Les étapes 200 à 215 sont alors remplacées par une unique septième étape 240 au cours de laquelle les troisièmes valeurs sont transmises au deuxième module de pilotage 85 par la liaison filaire. Le cas échéant, le ou les identifiants et/ou le mot de passe associé sont également transmis.

De préférence, lorsque le dispositif de commutation 10 est connecté au dispositif de configuration 20 par la liaison filaire 135, le dispositif de configuration 20 alimente électriquement les deux modules de pilotage 75 et 85. La septième étape 240 est donc immédiatement suivie de la cinquième étape 225.

Au cours de la cinquième étape 225, les troisièmes données sont mémorisées dans la troisième mémoire 110.

La cinquième étape 225 est suivie de la sixième étape, dans le cas où des deuxièmes valeurs sont transmises par l'appareil mobile 15 et dans le cas où des troisièmes valeurs sont transmises par le dispositif de configuration 20.

Lors de la sixième étape 235, le deuxième module de pilotage 85 vérifie la validité des deuxièmes ou troisièmes valeurs reçues. Par exemple, des plages de valeurs permises pour les paramètres de détection P sont mémorisées dans la troisième mémoire 110, et le premier processeur 115 compare les deuxièmes ou troisièmes valeurs reçues aux plages de valeurs permises.

Si les deuxièmes ou troisièmes valeurs reçues appartiennent à une plage de valeur permise, le deuxième module de pilotage 85 valide les deuxièmes ou troisièmes valeurs reçues. Sinon, le deuxième module de pilotage 85 ne valide pas les deuxièmes ou troisièmes valeurs reçues.

En complément facultatif, le deuxième module de pilotage 85 vérifie également le ou les identifiants et/ou le mot de passe, par exemple en les comparant à une liste d'identifiants et/ou de mots de passe autorisés. Si l'identifiant n'appartient pas à la liste d'identifiants autorisés, les deuxièmes ou troisièmes valeurs ne sont pas validées.

Si le signal de configuration est un signal crypté, le deuxième module de pilotage 85 décrypte les deuxièmes ou troisièmes valeurs avant de les valider.

Si les valeurs non validées sont des deuxièmes valeurs, le deuxième module de pilotage 85 inscrit dans la deuxième mémoire 105, au cours d'une huitième étape 245, un deuxième drapeau indiquant que les deuxièmes valeurs ne sont pas validées. Le deuxième drapeau est substitué au premier drapeau. Par exemple, l'appareil mobile 15 est propre à interroger le module de communication 80, par communication radiofréquence, pour déterminer si le deuxième drapeau est présent et, dans ce cas, pour indiquer à l'opérateur que les deuxièmes valeurs n'ont pas été prises en compte.

Si les valeurs non validées sont des troisièmes valeurs, le deuxième module de pilotage 85 transmet le deuxième drapeau au dispositif de configuration 20 par l'intermédiaire de la liaison filaire 135 au cours d'une neuvième étape 250.

Si les deuxièmes ou troisièmes valeurs sont validées, la sixième étape 235 est suivie d'une dixième étape 255. Au cours de la dixième étape 255, le deuxième module de pilotage 85 vérifie si le premier module de pilotage 75 est alimenté électriquement.

Si le premier module de pilotage 75 n'est pas alimenté, le deuxième module de pilotage 85 attend que le premier module de pilotage 75 soit alimenté. Cela est représenté par une flèche 260 sur la figure 3.

Si le premier module de pilotage 75 est alimenté électriquement, deux options sont possibles. Cela est représenté sur la figure 3 par une étape de test 265.

Si les valeurs reçues par le deuxième module de pilotage 85 sont des deuxièmes valeurs transmises par communication radiofréquence, l'étape de test 265 est suivie d'une onzième étape 270 et d'une douzième étape 275.

Au cours de la onzième étape 270, le deuxième module de pilotage 85 transmet au premier module de pilotage 75 les deuxièmes valeurs et commande la substitution aux premières valeurs des deuxièmes valeurs.

Au cours de la douzième étape 275, les deuxièmes valeurs sont substituées par le premier module de pilotage 75, dans la première mémoire 70, aux premières valeurs.

Si les valeurs reçues par le deuxième module de pilotage 85 sont des troisièmes valeurs transmises par liaison filaire, le deuxième module de pilotage 85 remplace, dans la première mémoire 70 et/ou dans la deuxième mémoire 105, les premières valeurs et/ou les deuxièmes valeurs par les troisièmes valeurs. En particulier, la substitution des premières valeurs dans la première mémoire 70 est effectuée par le premier module de pilotage 75 sur commande du deuxième module de pilotage 85.

Par exemple, l'étape de test 265 est suivie d'une treizième étape 280, d'une quatorzième étape 285 et d'une quinzième étape 290.

Lors de la treizième étape 280, le deuxième module de pilotage 85 substitue, dans la deuxième mémoire 105, les deuxièmes valeurs par les troisièmes valeurs. Le premier drapeau est également inscrit dans la deuxième mémoire 105 pour signifier que les deuxièmes valeurs ont été modifiées.

Lors de la quatorzième étape 285, le deuxième module de pilotage 85 transmet au premier module de pilotage 75 les troisièmes valeurs et commande la substitution aux premières valeurs des troisièmes valeurs.

Au cours de la quinzième étape 290, les premières valeurs sont substituées par le premier module de pilotage 75, dans la première mémoire 70, par les troisièmes valeurs.

Ainsi, à l'issue du procédé de configuration, les valeurs des paramètres de détection P que le premier module de pilotage 75 utilise pour détecter les défauts électriques sont modifiées par l'opérateur, à l'aide soit de l'appareil mobile 15 soit du dispositif de configuration 20.

Un ordinogramme des étapes d'un procédé de diagnostic de la nature d'un défaut électrique est représenté sur la figure 4.

Le procédé de diagnostic comprend une étape 300 de configuration, une étape 310 de détection, une étape 320 de transmission, une étape 330 de coupure, une étape 340 de signalisation, une étape 350 de mémorisation, une étape 360 d'alimentation, une étape 370 de transfert et une étape 380 d'affichage.

Au cours de l'étape 300 de configuration, le procédé de configuration décrit précédemment est mis en œuvre. En particulier, les premières valeurs sont modifiées dans la première mémoire 70, et le premier drapeau a été inscrit dans la deuxième mémoire 105. L'organe de commutation 35 est dans sa position fermée et le courant électrique C circule donc entre les deux bornes de connexion 25, 30. Le premier circuit électrique CE1 et le deuxième circuit électrique sont parcourus respectivement par le premier courant d'alimentation C1 et par le deuxième courant d'alimentation C2, qui sont générés par le convertisseur 67 à partir du courant électrique C.

Lors de l'étape de détection 310, un défaut électrique se produit et est détecté par le premier module de pilotage 75.

Lors de l'étape de transmission 320, le premier module de pilotage 75 génère le signal de commutation et le transmet à l'actionneur 65.

Le premier module de pilotage 75 transmet également au deuxième module de pilotage 85 un signal d'alerte. Le signal d'alerte est prévu pour signaler au deuxième module de pilotage 85 que l'alimentation électrique du deuxième module de pilotage 85 va bientôt cesser.

En outre, le premier module de pilotage génère des données d'identification du défaut électrique. Les données d'identification du défaut électrique comprennent, par exemple, un code numérique indiquant le type de défaut détecté et une date de détection du défaut.

Suite à la réception du signal d'alerte, le dispositif de stockage d'énergie électrique 117 génère le quatrième courant d'alimentation C4 . Le quatrième courant C4 est prévu pour alimenter le deuxième module de pilotage 85 pendant les étapes de coupure 330, de signalisation 340 et de mémorisation 350.

Au cours de l'étape de coupure 330, l'actionneur 65 déconnecte l'élément de connexion 60 des bornes de connexion 25, 30. Le courant électrique C cesse donc de circuler, de même que les premier et deuxième courants d'alimentation C1 et C2. Cependant, le deuxième module de pilotage 85 reste alimenté électriquement par le quatrième courant d'alimentation C4.

Lors de l'étape de signalisation 340, les données d'identification du défaut électrique sont transmises au deuxième module de pilotage 85. Par exemple, les données d'identification du défaut électrique sont inscrites dans un registre du premier module de pilotage 75, et le deuxième module de pilotage 85 collecte les données d'identification dans la troisième mémoire 110 suite à la réception du message d'alerte.

En variante, un message contenant les données d'identification du défaut électrique est transmis au deuxième module de pilotage 85.

Au cours de l'étape de mémorisation 350, les données d'identification du défaut électrique sont inscrites, par le deuxième module de pilotage 85, dans la troisième mémoire 110. Le dispositif de stockage d'énergie électrique 117 cesse alors de générer le quatrième courant d'alimentation C4.

Pendant l'étape d'alimentation 360, l'opérateur approche l'appareil mobile 15 du dispositif de commutation 10. Sur commande de l'opérateur, le module de transfert 130 émet un signal de diagnostic radiofréquence. Le signal de diagnostic provoque la génération, par l'antenne 100, du troisième courant d'alimentation C3. Le module de communication 80 est donc alimenté électriquement par le troisième courant d'alimentation C3.

Lors de l'étape de transfert 370, le module de communication 80 émet un signal d'identification à destination du module de transfert 130. Le signal d'identification comprend les données d'identification du défaut électrique stockées dans la deuxième mémoire 105.

Si le premier drapeau est présent dans la deuxième mémoire 105, le signal d'identification comprend également les deuxièmes valeurs.

Lors de l'étape d'affichage 380, la première interface homme-machine 120 indique alors à l'opérateur la nature du défaut ayant provoqué la commutation du dispositif de commutation électrique 10.

Grâce à la présence de deux modules de pilotage 75, 85, le premier module de pilotage 75 n'est chargé que des fonctionnalités de sécurité (détection de défauts et commande d'une commutation) et est donc susceptible de présenter une architecture simple et une consommation électrique faible. Le deuxième module de pilotage 85, en charge des autres fonctionnalités, n'est alimenté que lorsque la puissance électrique disponible est suffisante. Ainsi, bien que le dispositif de commutation 10 présente des fonctionnalités dépassant la simple sécurisation de l'installation électrique, le dispositif de commutation 10 est propre à sécuriser efficacement une installation électrique même si la puissance électrique disponible est très faible, puisque seul le premier module de pilotage 75 est alors alimenté.

En outre, le deuxième module de pilotage 85 permet la vérification de la conformité des valeurs de paramètres de détection reçues, en particulier leur appartenance à une gamme de valeurs permises. Ainsi, le risque qu'un opérateur transmette des valeurs ne permettant pas une détection efficace de défauts est limité. De plus, la validation des données reçues par décryptage et/ou grâce à un identifiant permet d'éviter qu'une personne non-autorisée ne modifie la configuration du dispositif de commutation 10. Le dispositif de commutation 10 est donc, là encore, plus sécurisé.

La transmission des données d'identification du défaut et leur stockage dans la mémoire 105 du module de communication 80 permet un diagnostic du défaut aisé même si le dispositif de commutation 10 n'est pas alimenté. Il est donc plus aisé de corriger ce défaut, et le dispositif de commutation est, là aussi, plus sécurisé.

Le tampon 95 permet d'éviter les fuites de courant depuis le premier module de pilotage 75 vers le deuxième module de pilotage 85 lorsque seul le premier module de pilotage 75 est alimenté électriquement.

Les circuits électriques CE1, CE2 ont été décrits dans un mode de réalisation dans lequel ces circuits CE1, CE2 sont séparés du module de déclenchement 55. Il est à noter que ces circuits CE1, CE2 sont susceptibles d'être au moins partiellement intégrés au module de déclenchement 55.

En outre, le dispositif de commutation 10 a été décrit ci-dessus sous la forme d'un disjoncteur 56 et d'un déclencheur séparés l'un de l'autre. Il est à noter que le dispositif de commutation 10 est susceptible d'être réalisé sous la forme d'un unique dispositif, comportant par exemple un unique boîtier.

## Revendications

1. Dispositif de commutation électrique (10) comprenant au moins deux plages de connexion (25, 30), un dispositif de mesure (45) configuré pour mesurer une première grandeur électrique d'un courant électrique circulant entre les deux plages de connexion (25, 30), un système d'alimentation électrique (50) propre à délivrer un premier courant d'alimentation électrique, un module de déclenchement (55) et un organe de commutation (35) propre à commuter entre une première position connectant électriquement les deux plages de connexion (25, 30) et une deuxième position dans laquelle les deux plages de connexion (25, 30) sont électriquement déconnectées l'une de l'autre, le module de déclenchement (55) comprenant:
- une première mémoire (70) de stockage de premières valeurs de paramètres de détection (P),
- un premier module de pilotage (75) configuré pour détecter un défaut électrique en fonction au moins de valeurs mesurées par le dispositif de mesure (45) et des premières valeurs stockées et pour générer en réponse un signal de commutation de l'organe de commutation (35), le dispositif de commutation électrique (10) étant **caractérisé en ce que** :
- un module de communication (80) comprend une deuxième mémoire (105) non-volatile, le module de communication (80) étant configuré pour recevoir, par communication radiofréquence, un signal de configuration contenant des deuxièmes valeurs des paramètres de détection (P) et pour stocker les deuxièmes valeurs reçues dans la deuxième mémoire (105),
- le module de déclenchement (55) comprend, en outre, un deuxième module de pilotage (85) configuré pour remplacer, dans la première mémoire (70), les premières valeurs par les deuxièmes valeurs, et
- le premier module de pilotage (75) est configuré pour comparer une deuxième grandeur électrique du premier courant d'alimentation électrique à un seuil et pour commander l'alimentation électrique du deuxième module de pilotage (85) si la deuxième grandeur électrique est supérieure ou égale au seuil.

2. Dispositif de commutation électrique selon la revendication 1, dans lequel la première mémoire (70) est une mémoire non-volatile.

3. Dispositif de commutation électrique selon la revendication 2, dans lequel le deuxième module de pilotage (85) est configuré pour comparer les deuxièmes valeurs stockées dans la deuxième mémoire (105) à au moins une plage de valeur permise, et pour substituer, dans la première mémoire (70), les deuxièmes valeurs aux premières valeurs seulement si les deuxièmes valeurs appartiennent à une plage de valeur permise.

4. Dispositif de commutation électrique selon l'une quelconque des revendications 1 à 3, dans lequel le premier module de pilotage (75) est configuré pour, suite à la détection d'un défaut, transmettre au deuxième module de pilotage (85) des données d'identification du défaut détecté, le deuxième module de pilotage (85) étant configuré pour inscrire les données d'identification dans la deuxième mémoire (105).

5. Dispositif de commutation électrique selon la revendication 4, dans lequel le premier module de pilotage (75) est configuré pour, suite à la détection d'un défaut, transmettre au deuxième module de pilotage (85) un signal d'alerte signalant qu'une coupure de l'alimentation électrique du deuxième module de pilotage (85) va avoir lieu, le deuxième module de pilotage (85) comportant un dispositif de stockage d'énergie électrique (117) configuré pour alimenter électriquement le deuxième module de pilotage (85) depuis la réception du signal d'alerte jusqu'à l'inscription des données d'identification dans la deuxième mémoire (105).

6. Dispositif de commutation électrique selon l'une quelconque des revendications 1 à 5, dans lequel le module de communication (80) est configuré pour générer, à partir du signal de configuration, un deuxième courant électrique d'alimentation du module de communication (80).

7. Dispositif de commutation électrique selon la revendication 6, dans lequel le deuxième module de pilotage (85) est configuré pour, suite à une reprise de l'alimentation électrique du deuxième module de pilotage (85) après une période de temps pendant laquelle le deuxième module de pilotage (85) n'était pas alimenté électriquement :
- consulter la deuxième mémoire (105), et
- si des deuxièmes valeurs de paramètres ont été stockées dans la deuxième mémoire (105) pendant la période de temps pendant laquelle le deuxième module de pilotage (85) n'était pas alimenté, remplacer dans la première mémoire (70) les premières valeurs par les deuxièmes valeurs.

8. Dispositif de commutation électrique selon l'une quelconque des revendications 1 à 7, dans lequel le deuxième module de pilotage (85) est, en outre, configuré pour recevoir, par liaison filaire (135), des troisièmes valeurs des paramètres de détection provenant d'un dispositif de configuration (20) distinct du dispositif de commutation électrique (10) et pour remplacer, dans la première mémoire (70) et/ou dans la deuxième mémoire (85), les premières valeurs et/ou les deuxièmes valeurs par les troisièmes valeurs reçues.

9. Dispositif de commutation électrique selon l'une quelconque des revendications 1 à 8, dans lequel le système d'alimentation électrique (50) comprend des transformateurs de courants propres à générer le premier courant électrique à partir d'au moins un courant électrique circulant entre les deux plages de connexion.

10. Dispositif de commutation électrique selon l'une quelconque des revendications 1 à 9, comportant un déclencheur et un disjoncteur (56), le déclencheur comportant un boîtier (40) accueillant le module de déclenchement (55), le disjoncteur (56) comprenant un boîtier (57) accueillant l'organe de commutation (35), les boîtiers (40, 57) du déclencheur et du disjoncteur (56) étant distincts l'un de l'autre.

11. Procédé de configuration d'un dispositif de commutation (10) comprenant au moins deux plages de connexion (25, 30), un dispositif de mesure (45) configuré pour mesurer une grandeur électrique d'un courant électrique circulant entre les deux plages de connexion (25, 30), un système d'alimentation électrique (50) propre à délivrer un premier courant d'alimentation électrique, un module de déclenchement (55) et un organe de commutation (35) propre à commuter entre une première position connectant électriquement les deux plages de connexion (25, 30) et une deuxième position dans laquelle les deux plages de connexion (25, 30) sont électriquement déconnectées l'une de l'autre, le module de déclenchement (55) comprenant :
- une première mémoire (70) dans laquelle des premières valeurs de paramètres de détection (P) sont mémorisées,
- un premier module de pilotage (75) configuré pour détecter un défaut électrique en fonction au moins de valeurs mesurées par le dispositif de mesure (45) et des premières valeurs stockées et pour générer en réponse un signal de commutation de l'organe de commutation (35),
- un module de communication (80) comprenant une deuxième mémoire (105) non-volatile, et
- un deuxième module de pilotage (85),
le procédé comprenant des étapes de:
- réception (210) de deuxièmes valeurs des paramètres de détection (P), par communication radiofréquence, par le module de communication (80),
- mémorisation (215) des deuxièmes valeurs dans la deuxième mémoire (105),
- comparaison, par le premier module de pilotage (75) d'une deuxième grandeur électrique du premier courant d'alimentation électrique à un seuil, et
- si la deuxième grandeur électrique est supérieure ou égale au seuil, commande, par le premier module de pilotage (75), de l'alimentation électrique du deuxième module de pilotage (85) et remplacement (275), dans la première mémoire (70), par le deuxième module de pilotage (85), des premières valeurs par les deuxièmes valeurs.

12. Procédé de configuration selon la revendication 11, comprenant, en outre, si la deuxième grandeur électrique est strictement inférieure au seuil, l'absence d'alimentation électrique du deuxième module de pilotage et l'attente (230) que la deuxième grandeur électrique soit supérieure au seuil,

13. Procédé de configuration selon la revendication 12, comprenant, en outre, des étapes de :- réception (240), par le deuxième module de pilotage (85), via une liaison filaire (135) de troisièmes valeurs des paramètres de détection (P),
- remplacement (280), dans la deuxième mémoire (105), des deuxièmes valeurs par les troisièmes valeurs, et
- remplacement (290), dans la première mémoire (70) des premières valeurs par les troisièmes valeurs.

14. Procédé de configuration selon l'une quelconque des revendications 11 à 13, comprenant, en outre, une étape de comparaison, par le deuxième module de pilotage (85), des deuxièmes valeurs mémorisées dans la deuxième mémoire à au moins une plage de valeurs permise, l'étape (275) de remplacement dans la première mémoire (70), par le deuxième module de pilotage (85), des premières valeurs par les deuxièmes valeurs étant mise en œuvre seulement si les deuxièmes valeurs appartiennent à une plage de valeur permise.

15. Procédé de diagnostic de la nature d'un défaut électrique, comprenant des étapes de :
- mise en œuvre (300) d'un procédé de configuration selon l'une quelconque des revendications 11 à 14,
- détection (310), par le premier module de pilotage (75), d'un défaut électrique,
- commande (320), par le premier module de pilotage (75) d'une coupure (330), par l'organe de commutation (35), du courant électrique circulant entre les deux plages de connexion (25, 30),
- génération, par le premier module de pilotage (75), de données d'identification du défaut électrique,
- transmission (340) des données d'identification au deuxième module de pilotage (85), et
- inscription (350), dans la deuxième mémoire (105), des données d'identification, et
- émission (370), par le module de communication (80), d'un signal d'identification radiofréquence comprenant les données d'identification.

16. Procédé de diagnostic de la nature d'un défaut électrique selon la revendication 15, comprenant, en outre, une étape (360) d'émission, par un appareil mobile (15) d'un signal radiofréquence provoquant la génération, par une antenne (100) du module de communication (80), d'un courant électrique (C3) d'alimentation du module de communication (80).

17. Procédé de diagnostic de la nature d'un défaut électrique selon la revendication 15 ou 16, dans lequel le deuxième module de pilotage (85) est alimenté électriquement, pendant les étapes de coupure (330), de transmission (340) des données d'identification et d'inscription (350), par un courant électrique (C4) généré par un dispositif de stockage d'énergie électrique (117).

## Patentansprüche

1. Elektrische Schaltvorrichtung (10), umfassend mindestens zwei Anschlussbereiche (25, 30), eine Messvorrichtung (45), die konfiguriert ist, um eine erste elektrische Größe eines elektrischen Stroms zu messen, der zwischen den zwei Anschlussbereichen (25, 30) fließt, ein Stromversorgungssystem (50), das geeignet ist, um einen ersten elektrischen Versorgungsstrom zuzuführen, ein Auslösemodul (55) und ein Schaltelement (35), das geeignet ist, um zwischen einer ersten Position, die zwei Anschlussbereiche (25, 30) elektrisch verbindet, und einer zweiten Position, in der die zwei Anschlussbereiche (25, 30) elektrisch voneinander getrennt sind, umzuschalten, das Auslösemodul (55) umfassend:
- einen ersten Speicher (70) zum Speichern der erster Erfassungsparameterwerte (P),
- ein erstes Steuermodul (75), das konfiguriert ist, um einen elektrischen Fehler abhängig mindestens von Werten, die von der Messvorrichtung (45) gemessen werden, und den ersten gespeicherten Werten zu erkennen und als Reaktion ein Schaltsignal für das Schaltelement (35) zu erzeugen, wobei die elektrische Schaltvorrichtung (10) **dadurch gekennzeichnet ist, dass**:
- ein Kommunikationsmodul (80), das einen nichtflüchtigen zweiten Speicher (105) umfasst, wobei das Kommunikationsmodul (80) konfiguriert ist, um durch Hochfrequenzkommunikation ein Konfigurationssignal zu empfangen, das zweite Werte der Erfassungsparameter (P) enthält, und um die empfangenen zweiten Werte in dem zweiten Speicher (105) zu speichern,
- das Auslösemodul (55) ferner ein zweites Steuermodul (85) umfasst, das konfiguriert ist, um in dem ersten Speicher (70) die ersten Werte durch die zweiten Werte zu ersetzen, und
- das erste Steuermodul (75) konfiguriert ist, um eine zweite elektrische Größe des ersten elektrischen Versorgungsstroms mit einem Schwellenwert zu vergleichen und die Stromversorgung des zweiten Steuermoduls (85) zu steuern, wenn die zweite elektrische Größe größer als oder gleich wie der Schwellenwert ist.

2. Elektrische Schaltvorrichtung nach Anspruch 1, wobei der erste Speicher (70) ein nichtflüchtiger Speicher ist.

3. Elektrische Schaltvorrichtung nach Anspruch 2, wobei das zweite Steuermodul (85) konfiguriert ist, um die in dem zweiten Speicher (105) gespeicherten zweiten Werte mit mindestens einem zulässigen Wertebereich zu vergleichen, und um in dem ersten Speicher (70) die ersten Werte nur dann durch die zweiten Werte zu ersetzen, wenn die zweiten Werte zu einem zulässigen Wertebereich gehören.

4. Elektrische Schaltvorrichtung nach einem der Ansprüche 1 bis 3, wobei das erste Steuermodul (75) konfiguriert ist, um nach der Erkennung eines Fehlers Identifizierungsdaten des erkannten Fehlers an das zweite Steuermodul (85) zu übertragen, wobei das zweite Steuermodul (85) konfiguriert ist, um die Identifizierungsdaten in den zweiten Speicher (105) zu schreiben.

5. Elektrische Schaltvorrichtung nach Anspruch 4, wobei das erste Steuermodul (75) konfiguriert ist, um nach der Erkennung eines Fehlers ein Warnsignal an das zweite Steuermodul (85) zu übertragen, das angibt, dass eine Unterbrechung der Stromversorgung des zweiten Steuermoduls (85) erfolgen wird, wobei das zweite Steuermodul (85) eine elektrische Energiespeichervorrichtung (117) umfasst, die konfiguriert ist, um das zweite Steuermodul (85) nach Empfang des Alarmsignals bis zum Schreiben der Identifizierungsdaten in den zweiten Speicher (105) elektrisch zu versorgen.

6. Elektrische Schaltvorrichtung nach einem der Ansprüche 1 bis 5, wobei das Kommunikationsmodul (80) konfiguriert ist, um anhand des Konfigurationssignals einen zweiten elektrischen Versorgungsstrom für das Kommunikationsmodul (80) zu erzeugen.

7. Elektrische Schaltvorrichtung nach Anspruch 6, wobei das zweite Steuermodul (85) konfiguriert ist, um nach einer Wiederaufnahme der elektrischen Versorgung des zweiten Steuermoduls (85) nach einer Zeitperiode, in der das zweite Steuermodul (85) nicht elektrisch versorgt wurde:
- den zweiten Speicher (105) abzufragen, und
- wenn während der Zeitperiode, in der das zweite Steuermodul (85) nicht versorgt wurde, zweite Parameterwerte in dem zweiten Speicher (105) gespeichert wurden, Ersetzen der ersten Werte durch die zweiten Werte in dem ersten Speicher (70).

8. Elektrische Schaltvorrichtung nach einem der Ansprüche 1 bis 7, wobei das zweite Steuermodul (85) ferner konfiguriert ist, um über eine Drahtverbindung (135) dritte Werte der Erfassungsparameter von einer anderen Konfigurationseinrichtung (20) als die elektrische Schaltvorrichtung (10) zu empfangen und in dem ersten Speicher (70) und/oder in dem zweiten Speicher (85) die ersten Werte und/oder die zweiten Werte durch die empfangenen dritten Werte zu ersetzen.

9. Elektrische Schaltvorrichtung nach einem der Ansprüche 1 bis 8, wobei das elektrische Versorgungssystem (50) Stromwandler umfasst, die geeignet sind, um den ersten elektrischen Strom aus mindestens einem elektrischen Strom zu erzeugen, der zwischen den zwei Anschlussbereichen fließt.

10. Elektrische Schaltvorrichtung nach einem der Ansprüche 1 bis 9, umfassend einen Auslöser und einen Leistungsschalter (56), der Auslöser umfassend ein Gehäuse (40), in dem das Auslösemodul (55) untergebracht ist, der Leistungsschalter (56) umfassend ein Gehäuse (57), das das Schaltelement (35) aufnimmt, wobei die Gehäuse (40, 57) des Auslösers und des Leistungsschalters (56) voneinander getrennt sind.

11. Konfigurationsverfahren einer Schaltvorrichtung (10), umfassend mindestens zwei Anschlussbereiche (25, 30), eine Messvorrichtung (45), die konfiguriert ist, um eine elektrische Größe eines elektrischen Stroms zu messen, der zwischen den zwei Anschlussbereichen (25, 30) fließt, ein Stromversorgungssystem (50), das geeignet ist, um einen ersten elektrischen Versorgungsstrom zuzuführen, ein Auslösemodul (55) und ein Schaltelement (35), das geeignet ist, um zwischen einer ersten Position, die zwei Anschlussbereiche (25, 30) elektrisch verbindet, und einer zweiten Position, in der die zwei Anschlussbereiche (25, 30) elektrisch voneinander getrennt sind, umzuschalten, das Auslösemodul (55) umfassend:
- einen ersten Speicher (70), in dem erste Erfassungsparameterwerte (P) gespeichert sind,
- ein erstes Steuermodul (75), das konfiguriert ist, um einen elektrischen Fehler abhängig mindestens von Werten, die von der Messvorrichtung (45) gemessen werden, und den ersten gespeicherten Werten zu erkennen und als Reaktion ein Schaltsignal für das Schaltelement (35) zu erzeugen,
- ein Kommunikationsmodul (80), umfassend einen zweiten nichtflüchtigen Speicher (105), und
- ein zweites Steuermodul (85),
das Verfahren umfassend die folgenden Schritte:
- Empfangen (210) von zweiten Werten der Erfassungsparameter (P) durch Hochfrequenzkommunikation von dem Kommunikationsmodul (80),
- Speichern (215) der zweiten Werte in dem zweiten Speicher (105),
- Vergleich, durch das erste Steuermodul (75), einer zweiten elektrischen Größe des ersten elektrischen Versorgungsstroms mit einem Schwellenwert, und
- wenn die zweite elektrische Größe größer als oder gleich wie der Schwellenwert ist, Steuern, durch das erste Steuermodul (75), der elektrischen Versorgung des zweiten Steuermoduls (85) und Ersatz (275), in dem ersten Speicher (70), durch das zweite Steuermodul (85) der ersten Werte durch die zweiten Werte.

12. Konfigurationsverfahren nach Anspruch 11, ferner umfassend, wenn die zweite elektrische Größe streng unter dem Schwellenwert ist, ein Fehlen einer elektrischen Versorgung des zweiten Steuermoduls und Abwarten (230), bis die zweite elektrische Größe über dem Schwellenwert ist.

13. Konfigurationsverfahren nach Anspruch 12, ferner umfassend die folgenden Schritte: Empfang (240), durch das zweite Steuermodul (85) über eine Drahtverbindung (135), dritter Werte der Erfassungsparameter (P),
- Ersatz (280), in dem zweiten Speicher (105), der zweiten Werte durch die dritten Werte, und
- Ersatz (290), in dem ersten Speicher (70), der ersten Werte durch die dritten Werte.

14. Konfigurationsverfahren nach einem der Ansprüche 11 bis 13, ferner umfassend einen Vergleichsschritt, durch das zweite Steuermodul (85), der in dem zweiten Speicher gespeicherten zweiten Werte mit mindestens einem zulässigen Wertebereich, wobei der Schritt (275) zum Ersatz in dem ersten Speicher (70) der ersten Werte durch die zweiten Werte durch das zweite Steuermodul (85) nur durchgeführt wird, wenn die zweiten Werte zu einem zulässigen Wertebereich gehören.

15. Diagnoseverfahren der Art eines elektrischen Fehlers, umfassend die folgenden Schritte:
- Bereitstellung (300) eines Konfigurationsverfahrens nach einem der Ansprüche 11 bis 14,
- Erkennung (310), durch das erste Steuermodul (75), eines elektrischen Fehlers,
- Steuerung (320), durch das erste Steuermodul (75), einer Unterbrechung (330) des elektrischen Stroms, der zwischen den zwei Anschlussbereichen (25, 30) fließt, mittels des Schaltelements (35),
- Erzeugung, durch das erste Kontrollmodul (75), von Identifizierungsdaten des elektrischen Fehlers,
- Übertragung (340) der Identifizierungsdaten an das zweite Steuermodul (85), und
- Schreiben (350) der Identifizierungsdaten in den zweiten Speicher (105), und
- Senden (370), durch das Kommunikationsmodul (80), eines Hochfrequenz-Identifizierungssignals, umfassend die Identifizierungsdaten.

16. Diagnoseverfahren der Art eines elektrischen Fehlers nach Anspruch 15, ferner umfassend einen Schritt (360) eines Übertragens eines Hochfrequenzsignals durch ein mobiles Gerät (15), das eine Antenne (100) des Kommunikationsmoduls (80) veranlasst, einen elektrischen Strom (C3) zur Versorgung des Kommunikationsmoduls (80) zu erzeugen.

17. Diagnoseverfahren der Art eines elektrischen Fehlers nach Anspruch 15 oder 16, wobei das zweite Steuermodul (85) während der Schritte des Unterbrechung (330), Übertragung (340) der Identifizierungs- und Registrierungsdaten (350) durch einen elektrischen Strom (C4), der von einer elektrischen Energiespeichereinrichtung (117) erzeugt wird, elektrisch versorgt wird.

## Claims

1. An electrical switching device (10) comprising at least two connection pads (25, 30), a measuring device (45) configured to measure a first electrical quantity of an electrical current flowing between the two connection pads (25, 30), an electrical supply system (50) adapted to supply a first electrical supply current, a trigger module (55) and a switching member (35) adapted to switch between a first position electrically connecting the two connection pads (25, 30) and a second position in which the two connection pads (25, 30) are electrically disconnected from each other, the trigger module (55) comprising:
- a first memory (70) for storing first detection parameter values (P),
- a first control module (75) configured to detect an electrical fault as a function, at a minimum, of values measured by the measuring device (45) and of the first stored values and to generate a switching signal for the switching member (35) in response, the electrical switching device (10) being **characterised in that**:
- a communication module (80) comprises a non-volatile second memory (105), the communication module (80) being configured to receive, by radio frequency communication, a configuration signal containing second values of the detection parameters (P) and to store the received second values in the second memory (105),
- the trigger module (55) further comprises a second control module (85) configured to replace, in the first memory (70), the first values with the second values, and
- the first control module (75) is configured to compare a second electrical quantity of the first electrical supply current with a threshold and to order the supplying of electricity to the second control module (85) if the second electrical quantity is greater than or equal to the threshold.

2. The electrical switching device of claim 1, wherein the first memory (70) is a non-volatile memory.

3. The electrical switching device of claim 2, wherein the second control module (85) is configured to compare the second values stored in the second memory (105) with at least one permitted range of values, and to substitute, in the first memory (70), the second values for the first values only if the second values fall within a permitted range of values.

4. The electrical switching device according to any one of claims 1 to 3, wherein the first control module (75) is configured to, following the detection of a fault, transmit to the second control module (85) identification data of the detected fault, the second control module (85) being configured to write the identification data into the second memory (105).

5. The electrical switching device according to claim 4, wherein the first control module (75) is configured to, following the detection of a fault, transmit to the second control module (85) an alert signal reporting that a cut-off of the electrical supply to the second control module (85) is about to occur, the second control module (85) comprising an electrical energy storage device (117) configured to supply electrical energy to the second control module (85) upon receipt of the warning signal until the writing of the identification data in the second memory (105).

6. The electrical switching device according to any one of claims 1 to 5, wherein the communication module (80) is configured to generate, from the configuration signal, a second electrical power supply to the communication module (80).

7. The electrical switching device according to claim 6, wherein the second control module (85) is configured to, following a resumption of power to the second control module (85) after a period of time during which the second control module (85) was not being electrically powered:
- consult the second memory (105), and
- if second parameter values were stored in the second memory (105) during the period of time when the second control unit (85) was not being powered, replace the first values with the second values in the first memory (70).

8. The electrical switching device according to any one of claims 1 to 7, wherein the second control module (85) is further configured to receive, via a wire connection (135), third values of the detection parameters from a configuration device (20) separate from the electrical switching device (10) and to replace, in the first memory (70) and/or in the second memory (85), the first values and/or the second values with the received third values.

9. The electrical switching device according to any one of claims 1 to 8, wherein the electrical supply system (50) comprises current transformers adapted to generate the first electrical current from at least one electrical current flowing between the two connection pads.

10. The electrical switching device according to any one of claims 1 to 9, comprising a trigger unit and a circuit breaker (56), the trigger unit comprising a case (40) housing the trigger module (55), the circuit breaker (56) comprising a case (57) housing the switching member (35), the cases (40, 57) of the trigger unit and of the circuit breaker (56) being distinct from each other.

11. A method for configuring a switching device (10) comprising at least two connection pads (25, 30), a measuring device (45) configured to measure an electrical quantity of an electrical current flowing between the two connection pads (25, 30), an electrical supply system (50) adapted to supply a first electrical supply current, a trigger module (55) and a switching member (35) adapted to switch between a first position electrically connecting the two connection pads (25, 30) and a second position in which the two connection pads (25, 30) are electrically disconnected from each other, the trigger module (55) comprising:
- a first memory (70) in which first detection parameter values (P) are stored,
- a first control module (75) configured to detect an electrical fault as a function, at a minimum, of values measured by the measuring device (45) and of the first stored values and to generate a switching signal for the switching member (35) in response,
- a communication module (80) comprising a second non-volatile memory (105),
and
- a second control module (85),
the method comprising the steps of:
- receiving (210) second values of the detection parameters (P), by radio frequency communication, from the communication module (80),
- storing (215) the second values in the second memory (105),
- the first control module (75) comparing a second electrical quantity of the first electrical supply current with a threshold, and
- if the second electrical quantity is greater than or equal to the threshold, the first control module (75) controlling the electrical supply to the second control module (85) and the second control module (85) replacing (275) the first values with the second values in the first memory (70).

12. The configuration method according to claim 11, further comprising, if the second electrical quantity is strictly below the threshold, not supplying power to the second control module and waiting (230) for the second electrical quantity to be above the threshold,

13. The configuration method according to claim 12, further comprising the steps of: - the second control module (85) receiving (240), via a wire link (135), third values of the detection parameters (P),
- replacing (280) the second values with the third values in the second memory (105), and
- replacing (290) the first values with the third values in the first memory (70).

14. A configuration method according to any one of claims 11 to 13, further comprising a step of the second control module (85) comparing the second values stored in the second memory with at least one permitted range of values, the step (275) of the second control module (85) replacing the first values with the second values in the first memory (70) being implemented only if the second values belong to a permitted range of values.

15. A method of diagnosing the nature of an electrical fault, comprising the steps of:
- implementing (300) a configuration method according to any of claims 11 to 14,
- the first control module (75) detecting (310) an electrical fault,
- the first control module (75) ordering (320) the switching member (35) to cut off (330) the electrical current flowing between the two connection pads (25, 30),
- the first control module (75) generating electrical fault identification data,
- transmitting (340) the identification data to the second control module (85), and
- writing (350) the identification data into the second memory (105), and
- the communication module (80) emitting (370) a radio frequency identification signal comprising the identification data.

16. The method of diagnosing the nature of an electrical fault according to claim 15, further comprising a step (360) of a mobile device (15) emitting a radio frequency signal causing an antenna (100) of the communication module (80) to generate an electrical current (C3) for supplying the communication module (80).

17. The method of diagnosing the nature of an electrical fault according to claim 15 or 16, wherein the second control module (85) is electrically supplied, during the steps of cutting off (330), transmitting (340) identification data, and writing (350), by an electrical current (C4) generated by an electrical energy storage device (117).
